# EUROPÄISCHE PATENTSCHRIFT

(11) **EP 3 743 449 B1**
(45) Veröffentlichungstag und Bekanntmachung des Hinweises auf die Patenterteilung: **17.04.2024**
(21) Anmeldenummer: 18807017.1
(22) Anmeldetag: 14.11.2018
(51) Int. Cl.: C08F 22/10, C08G 18/67, C08F 220/28, C08G 18/79, C08F 290/06, C08G 18/09, C08G 18/10, C08G 18/18, C08G 18/22, C08J 5/24

(54) **HALBZEUGE BASIEREND AUF DUALEM VERNETZUNGSMECHANISMUS**
SEMI-FINISHED PRODUCTS BASED ON DUAL CROSS-LINKING MECHANISM
DEMI-PRODUITS BASÉS SUR LE DOUBLE MÉCANISME DE RÉTICULATION

(30) Priorität: 14.11.2017 WO PCT/EP2017/079208; 14.11.2017 WO PCT/EP2017/079209; 14.11.2017 WO PCT/EP2017/079218; 17.05.2018 EP 18173040
(43) Veröffentlichungstag der Anmeldung: 02.12.2020
(73) Patentinhaber: Covestro Deutschland AG, 51373 Leverkusen (DE)
(72) Erfinder: MEISENHEIMER, Richard Daniel Matthias, 51065 Köln (DE); HEINZ, Paul, 51375 Leverkusen (DE); ACHTEN, Dirk, 51375 Leverkusen (DE)
(74) Vertreter: Levpat
(86) Internationale Anmeldenummer: PCT/EP2018/081161
(87) Internationale Veröffentlichungsnummer: WO 2019/096813

(56) Entgegenhaltungen:
- WO-A1-2018/087395
- US-A- 4 128 537
- US-A- 4 296 215
- US-A- 5 250 608

## Beschreibung

Die vorliegende Erfindung betrifft Halbzeuge, die aus einem Reaktionsgemisch enthaltend ethylenische Doppelbindungen und Isocyanatgruppen durch radikalische Polymerisation der ethylenischen Doppelbindungen erhalten werden. Durch Polyadditionsreaktionen der Isocyanatgruppen kann das Halbzeug zu einem Isocyanuratkunststoff mit vorteilhaften Eigenschaften umgesetzt werden.

Kunststoffe, die durch die Vernetzung von Isocyanatgruppen untereinander erhältlich sind, sind im Stand der Technik grundsätzlich bekannt (WO 2015/166983; WO 2016/170059; European Polymer Journal (1980) 16: 147-148). Verbundwerkstoffe, die derartige Kunststoffe als Matrix enthalten, werden in 2017/191175 offenbart.

Bisher wurden im Stand der Technik noch keine Halbzeuge beschrieben, die ihre endgültige mechanische Festigkeit sowie eine gute Chemikalienbeständigkeit primär durch die Vernetzung von Isocyanatgruppen untereinander erhalten.

Die vorliegende Erfindung betrifft in einer ersten Ausführungsform ein Verfahren zur Herstellung eines Halbzeugs, enthaltend die Schritte,
a) Benetzung einer Faser mit einem Reaktionsgemisch mit einem molaren Verhältnis von Isocyanatgruppen zu mit Isocyanat reaktiven Gruppen von wenigstens 3:1, welches
   (i) eine Isocyanatkomponente A;
   (ii) wenigstens einen Trimerisierungskatalysator C; und
   (iii) wenigstens eine Komponente ausgewählt aus der Gruppe bestehend aus den Komponenten B, D und E enthält, wobei

   die Komponente B wenigstens eine ethylenische Doppelbindung, aber keine mit Isocyanat reaktive Gruppe aufweist;
   die Komponente D in einem Molekül wenigstens eine mit Isocyanat reaktive Gruppe und wenigstens eine ethylenische Doppelbindung aufweist; und
   die Komponente E in einem Molekül sowohl wenigstens eine Isocyanatgruppe und wenigstens eine ethylenische Doppelbindung aufweist; und
b) radikalischer Polymerisation von wenigstens 50 % der im Reaktionsgemisch enthaltenen Doppelbindungen wobei sich die Viskosität der Reaktionsmischung bestimmt durch ein Platte/Platte-Rheometer gemäß ISO 6721-10:2015-09 bei einer Frequenz von 1/s bei 23°C um wenigstens 100% erhöht.

Ein "Reaktionsgemisch" ist ein Gemisch, das durch eine Kombination von radikalischer Polymerisation und Vernetzung der Isocyanatgruppen der Isocyanatkomponente untereinander zu einem hochfesten Werkstoff ausgehärtet werden kann. Die weiter unten definierten Komponenten A bis E sind obligatorische oder optionale Bestandteile des Reaktionsgemisches.

Die Isocyanatkomponente A ermöglicht die Ausbildung eines Polymers, das durch die Addition von Isocyanatgruppen entsteht. Hierbei entstehen insbesondere Isocyanuratgruppen. Die Vernetzung der in der Isocyanatkomponente A enthaltenen Isocyanatgruppen verleiht dem Polymer den Hauptanteil seiner mechanischen und chemischen Stabilität. Vermittelt wird die Vernetzung der Isocyanatgruppen durch den Trimerisierungskatalysator C.

Das molare Verhältnis von Isocyanatgruppen zu mit Isocyanatgruppen reaktiven Gruppen im Reaktionsgemisch liegt bei wenigstens 3 : 1, stärker bevorzugt bei wenigstens 5 : 1, noch stärker bevorzugt bei wenigstens 10 : 1 und besonders bevorzugt bei wenigstens 25 : 1.

Die Komponenten B, D und E sind jeweils durch die Anwesenheit einer ethylenischen Doppelbindung gekennzeichnet. Diese Doppelbindung ist Voraussetzung dafür, dass in der polymerisierbaren Zusammensetzung neben der Polyaddition der Isocyanatgruppen ein zweiter Vernetzungsmechanismus zur Verfügung steht.

Der vorliegenden Erfindung liegt die Idee zugrunde, durch ein Reaktionsgemisch, das durch zwei voneinander unterschiedliche und getrennt voneinander auslösbare Vernetzungsmechanismen ausgehärtet werden kann, ein bereits stabiles Halbzeug bereitzustellen, das in einem weiteren Verarbeitungsschritt zu einem Endprodukt umgesetzt werden kann. Hierbei dienen die ethylenischen Doppelbindungen in den Verbindungen B, D und E dazu, das Reaktionsgemisch durch radikalische Polymerisation auf der Faser so zu fixieren, dass die entsprechend behandelten Fasern transportiert und bearbeitet, insbesondere umgeformt werden können, ohne dass das Reaktionsgemisch von der Faser herabtropft. In einer besonders bevorzugten Ausführungsform ist die beschichtete Faser nach erfolgter radikalischer Polymerisation klebfrei. Ein Reaktionsgemisch, dessen Vernetzung nur auf der radikalischen Polymerisation der ethylenischen Doppelbindungen basiert, ist nicht geeignet, um hochfeste Kunststoffe im Sinne der Erfindung zu erhalten. Die große Härte und die Chemikalienbeständigkeit des aus dem erfindungsgemäßen Halbzeug erhältlichen Endprodukts beruht im Wesentlichen auf der Polyaddition der im Reaktionsgemisch enthaltenen Isocyanatgruppen. Deswegen ist es erfindungsgemäß erforderlich, den Anteil der Komponenten B, D und E am Reaktionsgemisch auf einen Wert zu beschränken, der die Herstellung eines Halbzeugs ermöglicht, das den oben genannten Forderungen genügt. So kann der Anteil der Polyisocyanatkomponente A, die für die guten Eigenschaften des aus dem Halbzeug erhältlichen Endprodukts verantwortlich ist, maximiert werden.

Aus diesem Grund ist der Anteil der Summe der Komponenten B, D und E am Reaktionsgemisch so bemessen, dass die radikalische Polymerisation von wenigstens 50 Mol-% der im Reaktionsgemisch vorhandenen ethylenischen Doppelbindungen genügt, um die Viskosität des Reaktionsgemisches um wenigstens 100 %, bevorzugt wenigstens 1.000 % und stärker bevorzugt wenigstens 10.000 % zu erhöhen. Der Anteil der Summe der Komponenten B, D und E am Reaktionsgemisch weist hierbei vorzugsweise eine Obergrenze auf, die bei höchstens 70 Gew.%, bevorzugt höchstens 60 Gew.%, besonders bevorzugt höchstens 50 Gew.%, ganz besonders bevorzugt höchstens 40 Gew.% des Reaktionsgemisches liegt. Das Reaktionsgemisch weist dabei bevorzugt einen Gewichtsanteil an Isocyanatgruppen im Reaktionsgemisch von wenigstens 1 % und höchstens 50 % auf.

Besonders bevorzugt ist der Anteil der Summe der Komponenten B, D und E am Reaktionsgemisch so bemessen, dass die radikalische Polymerisation von wenigstens 50 Mol-%, bevorzugt wenigstens 70 Mol-%, besonders bevorzugt wenigstens 80 Mol-% und ganz besonders bevorzugt wenigstens 90 Mol-%, der im Reaktionsgemisch vorhandenen ethylenischen Doppelbindungen dazu führt, dass das Reaktionsgemisch den Gelpunkt überschreitet wobei der Gelpunkt hier definiert ist als der Punkt wo G' größer G" wird, bestimmt durch ein Platte/Platte-Rheometer gemäß ISO 6721-10:2015-09 bei einer Frequenz von 1/s bei 23°C

Ganz besonders bevorzugt ist der Anteil der Summe der Komponenten B, D und E am Reaktionsgemisch so bemessen, dass die radikalische Polymerisation von wenigstens 50 Mol-%, bevorzugt wenigstens 70 Mol-%, besonders bevorzugt wenigstens 80 Mol-% und ganz besonders bevorzugt wenigstens 90 Mol-%, der im Reaktionsgemisch vorhandenen ethylenischen Doppelbindungen dazu führt, dass die auf der Faser entstehende Schicht klebfrei ist. Eine "klebfreie" Beschichtung ist insbesondere gekennzeichnet durch ein Modul G' bestimmt durch ein Platte/Platte-Rheometer gemäß ISO 6721-10:2015-09 bei einer Frequenz von 1/s bei 23°C von wenigstens 1*10⁵ Pa, bevorzugt 5*10⁵ Pa und besonders bevorzugt 1*10⁶ Pa.

In einer besonders bevorzugten Ausführungsform beträgt der Mindestanteil an ethylenisch ungesättigten Doppelbindungen im Reaktionsgemisch 1 Gew.-%, bevorzugt 2 Gew.-%, stärker bevorzugt 4 Gew.-% und am stärksten bevorzug 6 Gew.-%. Unter Einhaltung desvorgenannten Mindestanteils legt der Höchstanteil an ethylenisch gesättigten Doppelbindungen 30 Gew.-%, bevorzugt 25 Gew.-%, stärker bevorzugt 20 Gew.-% und am stärksten bevorzugt 15 Gew.-%

In einer weiteren besonders bevorzugten Ausführungsform liegen ethylenisch ungesättigten Doppelbindungen ohne gegenüber Isocyanat reaktive Funktionalität in der Reaktionsmischung neben ethylenisch ungesättigten Gruppen mit gegenüber Isocyanat reaktiver Funktionalität in einem molaren Verhältnis von wenigstens 1 : 5 und höchstens 100 : 1, bevorzugt wenigstens 2 : 1 und höchstens 75 : 1, besonders bevorzugt wenigstens 1 : 1 und höchstens 50 : 1 und ganz besonders bevorzugt wenigstens 5 : 1 und höchstens 25 : 1 vor.

In einer weiteren bevorzugten Ausführungsform ist die Viskosität der Reaktionsmischung so ausgeführt, das auch dichte und feinfaserige Fasermatten, Fasergewebe und Fasergelege von der Reaktionsmischung gut benetzt werden, ohne dass die durch das Reaktionsgemisch auf der Faser gebildete Schicht so dünn wird, dass das Reaktionsgemisch widerstandslos durch die faserigen Füllstoffe durchfließt. Bevorzugt ist die Viskosität durch eine die Mischung von in der Tendenz höher viskosen Polyisocyanaten und niedrig viskosen Verbindungen mit ethylenisch ungesättigten Doppelbindungen in einem Bereich von 50 bis50000 mPas eingestellt, bevorzugt 100 bis 30000 mPas und besonders bevorzugt 200 bis 20000 mPas.

### Isocyanatkomponente A

Unter "Isocyanatkomponente A" wird im Sinne der Erfindung die Isocyanatkomponente im reaktiven Harz bezeichnet. Anders ausgedrückt handelt es sich dabei um die Summe aller Verbindungen im reaktiven Harz, die Isocyanat-Gruppen aufweisen mit Ausnahme der Komponente E. Die Isocyanatkomponente A wird also als Edukt im erfindungsgemäßen Verfahren eingesetzt. Wenn hier von "Isocyanatkomponente A" insbesondere von "Bereitstellen der Isocyanatkomponente A" die Rede ist, dann bedeutet dies, dass die Isocyanatkomponente A als Edukt existiert und eingesetzt wird. Die Isocyanatkomponente A enthält vorzugsweise wenigstens ein Polyisocyanat.

Der Begriff "Polyisocyanat", wie hier verwendet, ist eine Sammelbezeichnung für Verbindungen, die im Molekül zwei oder mehrere Isocyanat-Gruppen (hierunter versteht der Fachmann freie Isocyanat-Gruppen der allgemeinen Struktur -N=C=O) enthalten. Einfachste und wichtigste Vertreter dieser Polyisocyanate sind die Diisocyanate. Diese haben die allgemeinen Struktur O=C=N-R-N=C=O, wobei R üblicherweise für aliphatische, alicyclische und/oder aromatische Reste steht.

Aus Polyisocyanaten lassen sich wegen der Mehrfachfunktionalität (≥ 2 Isocyanat-Gruppen) eine Vielzahl von Polymeren (z.B. (z. B. Polyurethane, Polyharnstoffe und Polyisocyanurate) und niedermolekularen Verbindungen (z.B. solche mit Uretdion-, Isocyanurat-, Allophanat-, Biuret-, Iminooxadiazindion- und/oder Oxadiazintrionstruktur) herstellen.

Der Begriff "Polyisocyanate" bezeichnet in dieser Anmeldung monomere und/oder oligomere Polyisocyanate gleichermaßen. Zum Verständnis vieler Aspekte der Erfindung ist es jedoch wichtig, zwischen monomeren Diisocyanaten und oligomeren Polyisocyanaten zu unterscheiden. Wenn in dieser Anmeldung von "oligomeren Polyisocyanaten" die Rede ist, dann sind damit Polyisocyanate gemeint, die aus mindestens zwei monomeren Diisocyanatmolekülen aufgebaut sind, d.h. es sind Verbindungen, die ein Reaktionsprodukt aus mindestens zwei monomeren Diisocyanatmolekülen darstellen oder enthalten.

Die Herstellung oligomerer Polyisocyanate aus monomeren Diisocyanaten wird hier auch als Modifizierung monomerer Diisocyanate bezeichnet. Diese "Modifizierung", wie hier verwendet, bedeutet dabei die Reaktion monomerer Diisocyanate zu oligomeren Polyisocyanaten mit Uretdion-, Isocyanurat-, Allophanat-, Biuret-, Iminooxadiazindion- und/oder Oxadiazintrionstruktur.

So ist z.B. Hexamethylendiisocyanat (HDI) ein "monomeres Diisocyanat", da es zwei Isocyanat-Gruppen enthält und kein Reaktionsprodukt aus mindestens zwei Polyisocyanatmolekülen darstellt:

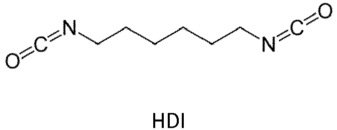

Reaktionsprodukte aus mindestens zwei HDI-Molekülen, die immer noch über mindestens zwei Isocyanat-Gruppen verfügen, sind demgegenüber "oligomere Polyisocyanate" im Sinne der Erfindung. Vertreter solcher "oligomerer Polyisocyanate" sind ausgehend von dem monomeren HDI z.B. das HDI-Isocyanurat und das HDI-Biuret, die jeweils aus drei monomeren HDI Bausteinen aufgebaut sind:

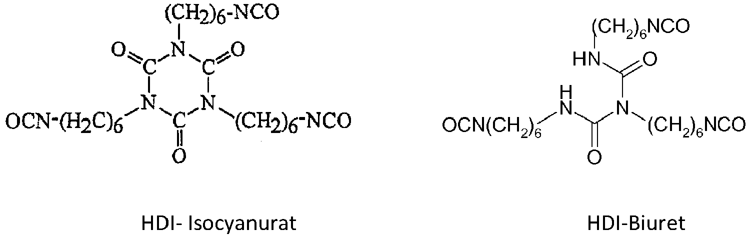

### (idealisierte Strukturformeln)

Erfindungsgemäß beträgt der Gewichtsanteil an Isocyanatgruppen bezogen auf die Gesamtmenge der Isocyanatkomponente A wenigstens 15 Gew.-%.

Grundsätzlich sind monomere und oligomere Polyisocyanate zur Verwendung in der erfindungsgemäßen Isocyanatkomponente A gleichermaßen geeignet. Folglich kann die Isocyanatkomponente A im Wesentlichen aus monomeren Polyisocyanaten oder im Wesentlichen aus oligomeren Polyisocyanaten bestehen. Sie kann aber auch oligomere und monomere Polyisocyanate in beliebigen Mischungsverhältnissen enthalten.

In einer bevorzugten Ausführungsform der Erfindung ist die bei der Trimerisierung als Edukt eingesetzte Isocyanatkomponente A monomerarm (d.h. arm an monomeren Diisocyanaten) und enthält bereits oligomere Polyisocyanate. Die Begriffe "monomerarm" und "arm an monomeren Diisocyanaten" werden hier in Bezug auf die Isocyanatkomponente A synonym verwendet.

Besonders praxisgerechte Ergebnisse stellen sich ein, wenn die Isocyanatkomponente A einen Anteil an monomeren Diisocyanaten in der Isocyanatkomponente A von höchstens 20 Gew.-%, insbesondere höchstens 15 Gew.-% oder höchstens 10 Gew.-%, jeweils bezogen auf das Gewicht der Isocyanatkomponente A, aufweist. Vorzugsweise weist die Isocyanatkomponente A einen Gehalt an monomeren Diisocyanaten von höchstens 5 Gew.-%, vorzugsweise höchstens 2,0 Gew.-%, besonders bevorzugt höchstens 1,0 Gew.-%, jeweils bezogen auf das Gewicht der Isocyanatkomponente A, auf. Besonders gute Ergebnisse stellen sich ein, wenn die Isocyanatkomponente A im Wesentlichen frei von monomeren Diisocyanaten ist. Im Wesentlichen frei bedeutet dabei, dass der Gehalt an monomeren Diisocyanaten höchstens 0,5 Gew.-%, bezogen auf das Gewicht der Isocyanatkomponente A, beträgt.

Gemäß einer besonders bevorzugten Ausführungsform der Erfindung besteht die Isocyanatkomponente A vollständig oder zu mindestens 80, 85, 90, 95, 98, 99 oder 99,5 Gew.-%, jeweils bezogen auf das Gewicht der Isocyanatkomponente A, aus oligomeren Polyisocyanaten. Hierbei ist ein Gehalt an oligomeren Polyisocyanaten von wenigstens 99 Gew.-% bevorzugt. Dieser Gehalt an oligomeren Polyisocyanaten bezieht sich auf die Isocyanatkomponente A, wie sie bereitgestellt wird. D.h. die oligomeren Polyisocyanate werden nicht während des erfindungsgemäßen Verfahrens als Zwischenprodukt gebildet, sondern liegen bereits zu Beginn der Reaktion in der als Edukt eingesetzten Isocyanatkomponente A vor.

Polyisocyanatzusammensetzungen, die monomerarm oder im Wesentlichen frei von monomeren Isocyanaten sind, lassen sich erhalten, indem nach der eigentlichen Modifizierungsreaktion in jedem Fall mindestens ein weiterer Verfahrensschritt zur Abtrennung der nicht umgesetzten überschüssigen monomeren Diisocyanate durchgeführt wird. Diese Monomerenabtrennung kann besonders praxisgerecht nach an sich bekannten Verfahren, vorzugsweise durch Dünnschichtdestillation im Hochvakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan, erfolgen.

Gemäß einer bevorzugten Ausführungsform der Erfindung wird die erfindungsgemäße Isocyanatkomponente A durch Modifizierung monomerer Diisocyanate mit anschließender Abtrennung nicht umgesetzter Monomere erhalten.

Gemäß einer besonderen Ausführungsform der Erfindung enthält eine monomerarme Isocyanatkomponente A jedoch ein monomeres Fremddiisocyanat. Hierbei bedeutet "monomeres Fremddiisocyanat", dass es sich von den monomeren Diisocyanaten, die zur Herstellung der in der Isocyanatkomponente A enthaltenen oligomeren Polyisocyanaten verwendet wurden, unterscheidet.

Eine Zugabe von monomerem Fremddiisocyanat kann zur Erzielung spezieller technischer Effekte, wie z.B. einer besonderen Härte vorteilhaft sein. Besonders praxisgerechte Ergebnisse stellen sich ein, wenn die Isocyanatkomponente A einen Anteil an monomeren Fremddiisocyanat in der Isocyanatkomponente A von höchstens 20 Gew.-%, insbesondere höchstens 15 Gew.-% oder höchstens 10 Gew.-%, jeweils bezogen auf das Gewicht der Isocyanatkomponente A, aufweist. Vorzugsweise weist die Isocyanatkomponente A einen Gehalt an monomeren Fremddiisocyanat von höchstens 5 Gew.-%, vorzugsweise höchstens 2,0 Gew.-%, besonders bevorzugt höchstens 1,0 Gew.-%, jeweils bezogen auf das Gewicht der Isocyanatkomponente A, auf.

Gemäß einer weiteren besonderen Ausführungsform des erfindungsgemäßen Verfahrens enthält die Isocyanatkomponente A monomere Monoisocyanate oder monomere Isocyanate mit einer Isocyanatfunktionalität größer zwei, d.h. mit mehr als zwei Isocyanatgruppen pro Molekül. Die Zugabe von monomeren Monoisocyanaten oder monomeren Isocyanaten mit einer Isocyanatfunktionalität größer zwei hat sich als vorteilhaft erwiesen, um die Netzwerkdichte der Beschichtung zu beeinflussen. Besonders praxisgerechte Ergebnisse stellen sich ein, wenn die Isocyanatkomponente A einen Anteil an monomeren Monoisocyanaten oder monomeren Isocyanaten mit einer Isocyanatfunktionalität größer zwei in der Isocyanatkomponente A von höchstens 20 Gew.-%, insbesondere höchstens 15 Gew.-% oder höchstens 10 Gew.-%, jeweils bezogen auf das Gewicht der Isocyanatkomponente A, aufweist. Vorzugsweise weist die Isocyanatkomponente A einen Gehalt an monomeren Monoisocyanaten oder monomeren Isocyanaten mit einer Isocyanatfunktionalität größer zwei von höchstens 5 Gew.-%, vorzugsweise höchstens 2,0 Gew.-%, besonders bevorzugt höchstens 1,0 Gew.-%, jeweils bezogen auf das Gewicht der Isocyanatkomponente A, auf. Vorzugsweise wird bei der erfindungsgemäßen Trimerisierungsreaktion kein monomeres Monoisocyanat oder monomeres Isocyanat mit einer Isocyanatfunktionalität größer zwei mitverwendet.

Die oligomeren Polyisocyanate können erfindungsgemäß insbesondere Uretdion-, Isocyanurat-, Allophanat-, Biuret-, Iminooxadiazindion- und/oder Oxadiazintrionstruktur aufweisen. Gemäß einer Ausführungsform der Erfindung weisen die oligomeren Polyisocyanate mindestens eine der folgenden oligomeren Strukturtypen oder deren Gemische auf:

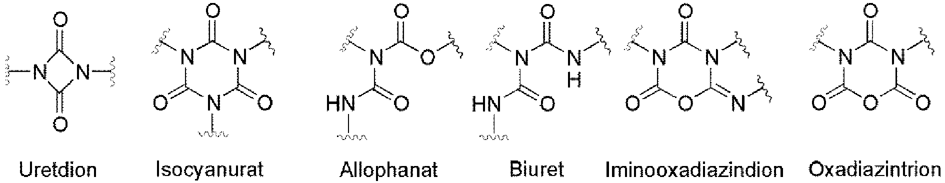

Gemäß einer bevorzugten Ausführungsform der Erfindung wird eine Isocyanatkomponente A eingesetzt, deren Isocyanuratstrukturanteil mindestens 50 mol-%, vorzugsweise mindestens 60 mol-%, stärker bevorzugt mindestens 70 mol-%, noch stärker bevorzugt mindestens 80 mol-%, noch stärker bevorzugt mindestens 90 mol-% und besonders bevorzugt mindestens 95 mol-% bezogen auf die Summe der vorliegenden oligomeren Strukturen aus der Gruppe, bestehend aus Uretdion-, Isocyanurat-, Allophanat-, Biuret-, Iminooxadiazindion- und Oxadiazintrionstruktur in der Isocyanatkomponente A, beträgt.

Gemäß einer weiteren bevorzugten Ausführungsform der Erfindung wird im erfindungsgemäßen Verfahren eine Isocyanatkomponente A, die neben der Isocyanuratstruktur mindestens ein weiteres oligomeres Polyisocyanat mit Uretdion-, Biuret-, Allophanat-, Iminooxadiazindion- und Oxadiazintrionstruktur und Mischungen davon enthält, eingesetzt.

Die Anteile an Uretdion-, Isocyanurat-, Allophanat-, Biuret-, Iminooxadiazindion- und/oder Oxadiazintrionstruktur in der Isocyanatkomponente A können z.B. durch NMR-Spektroskopie bestimmt werden. Bevorzugt lässt sich hierbei die 13C-NMR-Spektroskopie, vorzugsweise protonenentkoppelt, einsetzen, da die genannten oligomeren Strukturen charakteristische Signale liefern.

Unabhängig vom der zugrunde liegenden oligomeren Struktur (Uretdion-, Isocyanurat-, Allophanat-, Biuret-, Iminooxadiazindion- und/oder Oxadiazintrionstruktur) weist eine beim erfindungsgemäßen Verfahren einzusetzende oligomere Isocyanatkomponente A und/oder die darin enthaltenen oligomeren Polyisocyanate vorzugsweise eine (mittlere) NCO-Funktionalität von 2,0 bis 5,0, vorzugsweise von 2,3 bis 4,5 auf.

Besonders praxisgerechte Ergebnisse stellen sich ein, wenn die erfindungsgemäß einzusetzende Isocyanatkomponente A einen Gehalt an Isocyanatgruppen von 8,0 bis 28,0 Gew.-%, vorzugsweise von 14,0 bis 25,0 Gew.-%, jeweils bezogen auf das Gewicht der Isocyanatkomponente A, aufweist.

Herstellverfahren für die in der Isocyanatkomponente A erfindungsgemäß einzusetzenden oligomeren Polyisocyanate mit Uretdion-, Isocyanurat-, Allophanat-, Biuret-, Iminooxadiazindion- und/oder Oxadiazintrionstruktur sind beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP A 0 339 396 und EP-A 0 798 299 beschrieben.

Gemäß einer zusätzlichen oder alternativen Ausführungsform der Erfindung ist die erfindungsgemäße Isocyanatkomponente A dadurch definiert, dass sie oligomere Polyisocyanate enthält, die aus monomeren Diisocyanaten unabhängig von der Art der verwendeten Modifizierungsreaktion unter Einhaltung eines Oligomerisierungsgrades von 5 bis 45 %, vorzugsweise 10 bis 40 %, besonders bevorzugt 15 bis 30 %, erhalten wurden. Unter "Oligomerisierungsgrad" ist dabei der Prozentsatz der in der Ausgangsmischung ursprünglich vorhandenen Isocyanatgruppen zu verstehen, der während des Herstellprozesses unter Bildung von Uretdion-, Isocyanurat-, Allophanat-, Biuret-, Iminooxadiazindion- und/oder Oxadiazintrionstrukturen verbraucht wird.

Geeignete Polyisocyanate zur Herstellung der beim erfindungsgemäßen Verfahren einzusetzenden Isocyanatkomponente A und der darin enthaltenen monomeren und/oder oligomeren Polyisocyanate sind beliebige, auf verschiedene Weise, beispielsweise durch Phosgenierung in der Flüssig- oder Gasphase oder auf phosgenfreien Weg, wie z.B. durch thermische Urethanspaltung, zugängliche Polyisocyanate. Besonders gute Ergebnisse stellen sich ein, wenn es sich bei den Polyisocyanaten um monomere Diisocyanate handelt. Bevorzugte monomere Diisocyanate sind solche, die ein Molekulargewicht im Bereich von 140 bis 400 g/mol aufweisen, mit aliphatisch, cycloaliphatisch, araliphatisch und/oder aromatisch gebundenen Isocyanatgruppen, wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan(H12MDI), 1,3-und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyl-dicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(iso-cyanatomethyl)benzol (Xyxlylendiisocyanat; XDI), 1,3-und 1,4-Bis(1-isocyanato-1-methyl-ethyl)-benzol (TMXDI) und Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin sowie beliebige Gemische solcher Diisocyanate. Weitere ebenfalls geeignete Diisocyanate finden sich darüber hinaus beispielsweise in Justus Liebigs Annalen der Chemie Band 562 (1949) S. 75 - 136.

Geeignete monomere Monoisocyanate, die in der Isocyanatkomponente A gegebenenfalls eingesetzt werden können, sind beispielsweise n-Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexylisocyanat oder beliebige Gemische solcher Monoisocyanate. Als monomeres Isocyanat mit einer Isocyanatfunktionalität größer zwei, das der Isocyanatkomponente A gegebenenfalls zugesetzt werden kann, sei beispielhaft 4-Isocyanatomethyl-1,8-octandiisocyanat (Triisocyanatononan; TIN) genannt.

Gemäß einer Ausführungsform der Erfindung enthält die Isocyanatkomponente A höchstens 30 Gew.-%, insbesondere höchstens 20 Gew.-%, höchstens 15 Gew.-%, höchstens 10 Gew.-%, höchstens 5 Gew.-% oder höchstens 1 Gew.-%, jeweils bezogen auf das Gewicht der Isocyanatkomponente A, an aromatischen Polyisocyanaten. Wie hier verwendet, bedeutet "aromatisches Polyisocyanat" ein Polyisocyanat, welches mindestens eine aromatisch gebundene Isocyanatgruppe aufweist.

Unter aromatisch gebundenen Isocyanat-Gruppen werden Isocyanat-Gruppen verstanden, die an einen aromatischen Kohlenwasserstoffrest gebunden sind.

Gemäß einer bevorzugten Ausführungsform des erfindungsgemäßen Verfahrens wird eine Isocyanatkomponente A eingesetzt, die ausschließlich aliphatisch und/oder cycloaliphatisch gebundene Isocyanat-Gruppen aufweist.

Unter aliphatisch bzw. cycloaliphatisch gebundenen Isocyanat-Gruppen werden Isocyanat-Gruppen verstanden, die an einen aliphatischen bzw. cycloaliphatischen Kohlenwasserstoffrest gebunden sind. Gemäß einer anderen bevorzugten Ausführungsform des erfindungsgemäßen Verfahrens wird eine Isocyanatkomponente A eingesetzt, die aus einem oder mehreren oligomeren Polyisocyanaten besteht oder diese enthält, wobei die ein oder mehreren oligomeren Polyisocyanate ausschließlich aliphatisch und/oder cycloaliphatisch gebundene Isocyanat-Gruppen aufweisen.

Gemäß einer weiteren Ausführungsform der Erfindung besteht die Isocyanatkomponente A zu mindestens 70, 80, 85, 90, 95, 98 oder 99 Gew.-%, jeweils bezogen auf das Gewicht der Isocyanatkomponente A, aus Polyisocyanaten, die ausschließlich aliphatisch und/oder cycloaliphatisch gebundene Isocyanat-Gruppen aufweisen. Praktische Versuche haben gezeigt, dass sich besonders gute Ergebnisse mit Isocyanatkomponenten A erzielen lassen, bei denen die darin enthaltenen oligomeren Polyisocyanate ausschließlich aliphatisch und/oder cycloaliphatisch gebundene Isocyanat-Gruppen aufweisen.

Gemäß einer besonders bevorzugten Ausführungsform des erfindungsgemäßen Verfahrens wird eine Polyisocyanatzusammensetzung A eingesetzt, die aus einem oder mehreren oligomeren Polyisocyanaten besteht oder diese enthält, wobei die ein oder mehreren oligomeren Polyisocyanate auf Basis von 1,4-Diisocyanatobutan (BDI), 1,5-Diisocyanatopentan (PDI), 1,6-Diisocyanatohexan (HDI), Isophorondiisocyanat (IPDI) oder 4,4'-Diisocyanatodicyclohexylmethan (H12MDI) oder deren Mischungen aufgebaut sind.

Gemäß einer weiteren Ausführungsform der Erfindung werden beim erfindungsgemäßen Verfahren Isocyanatkomponenten A mit einer Viskosität größer 500 mPas und geringer 200.000 mPas, vorzugsweise größer 1.000 mPas und geringer 100.000 mPas, stärker bevorzugt größer 1.000 mPas und geringer 50.000 mPas und noch stärker bevorzugt größer 1.000 mPas und geringer 25.000 mPas, gemessen nach DIN EN ISO 3219 bei 21 °C, eingesetzt.

### Komponente B

Als Komponente B sind alle Verbindungen geeignet, die wenigstens eine ethylenische Doppelbindung enthalten. Diese ethylenische Doppelbindung ist durch einen radikalischen Reaktionsmechanismus mit anderen ethylenischen Doppelbindungen vernetzbar. Diese Bedingung erfüllen vorzugsweise aktivierte Doppelbindungen, die sich zwischen dem α- und dem β-Kohlenstoffatom neben einer aktivierenden Gruppe befinden. Bei der aktivierenden Gruppe handelt es sich vorzugsweise um eine Carboxyl- oder Carbonylgruppe. Ganz besonders bevorzugt ist die Komponente B ein Acrylat, ein Methacrylat, der Ester eines Acrylats oder der Ester eines Methacrylats. Vorzugsweise enthält die Komponente B keine mit Isocyanat reaktiven Gruppen wie weiter oben in dieser Anmeldung definiert.

Bevorzugte Komponenten B sind Komponenten B1 mit einer, Komponenten B2 mit zweien und Komponenten B3 mit dreien der oben beschriebenen ethylenischen Doppelbindungen. Besonders bevorzugt sind B1 und / oder B2.

In einer bevorzugten Ausführungsform wird als Komponente B ein Gemisch aus wenigstens einer Komponente B1 und wenigstens einer Komponente B2 verwendet.

In einer weiteren bevorzugten Ausführungsform wird als Komponente B ein Gemisch aus wenigstens einer Komponente B1 und wenigstens einer Komponente B3 verwendet.

In noch einer weiteren bevorzugten Ausführungsform wird als Komponente B ein Gemisch aus wenigstens einer Komponente B2 und wenigstens einer Komponente B3 verwendet.

In noch einer weiteren bevorzugten Ausführungsform wird als Komponente B ein Gemisch aus wenigstens einer Komponente B1, wenigstens Komponente B2 und wenigstens einer Komponente B3 verwendet. Bevorzugt wird ein Gemisch aus wenigstens einer Komponente B1 mit wenigstens einer Komponente B2 verwendet. Hierbei liegt das Massenverhältnis der Komponenten B1 und B2 vorzugsweise zwischen 30 : 1 und 1 :30, stärker bevorzugt zwischen 20 : 1 und 1 : 20, noch stärker bevorzugt zwischen 1 : 10 und 10 : 1 und am stärksten bevorzugt zwischen 2 : 1 und 1 : 2.

Bevorzugte Komponenten B1 sind Methyl(meth)acrylat, Ethyl(meth)acrylat , Propyl(meth)acrylat , iso- Propyl(meth)acrylat, Butyl(meth)acrylat, iso-Butyl(meth)acrylat, tert-Butyl(meth)acrylat, Hexyl(meth)acrylat, Heptyl(meth)acrylat, 2-Ethylhexyl(meth)acrylat, Cyclohexyl(meth)acrylat, Octyl(meth)acrylat, iso-Octyl(meth)acrylat, Decyl(meth)acrylat, Benzyl(meth)acrylat, Tetrahydrofurfuryl(meth)acrylat, Octadecyl(meth) acrylat, Dodecyl(meth)acrylat, Tetradecyl(meth)acrylat, Oleyl(meth)acrylat, 4-Methylphenyl(meth)acrylat, Benzyl(meth)acrylat, Furfuryl(meth)acrylat, Cetyl(meth)acrylat, 2-Phenylethyl(meth)acrylat, Isobornyl(meth)acrylat, Neopentyl(meth)acrylat, Methacrylamid und n-Isopropylmethacrylamid.

Bevorzugte Komponenten B2 sind Vinyl(meth)acrylat, Tetraethylenglycoldi(meth)acrylat, Dipropylenglycoldi(meth)acrylate, 1,6-Hexandioldi(meth)acrylat, Neopentylglycolpropoxylatdi(meth)acrylat, Tripropyleneglycoldi(meth)acrylat, Bisphenol A ethoxyliertes Di(meth)acrylat, Ethylenglycoldi(meth)acrylat, Propylenglycoldi(meth)acrylat, Neopentylglycoldi(meth)acrylat, Hexamethylenglycoldi(meth)acrylat, Bisphenol A Di(meth)acrylat und 4,4'-Bis(2-(meth)acryloyloxyethoxy)diphenylpropan.

Bevorzugte Komponenten B3 sind ethoxyliertes Trimethylolpropanetri(meth)acrylat, Propoxyliertes Glyceroltri(meth)acrylat, Pentaerythritoltri(meth)acrylat, Trimethylolpropanethoxytri(meth)acrylat, Trimethylolpropantri(meth)acrylat, Alkoxyliertes Tria(meth)crylat und tris(2-(meth)acryloylethyl)isocyanurat.

### Trimerisierungskatalysator C

Der Trimerisierungskatalysator C kann aus einem oder verschiedenen Katalysatortypen gemischt sein, enthält aber mindestens einen Katalysator, der die Trimerisierung von Isocyanatgruppen zu Isocyanuraten oder Iminooxadiazindionen bewirkt.

Geeignete Katalysatoren für das erfindungsgemäße Verfahren sind beispielsweise einfache tertiäre Amine, wie z.B. Triethylamin, Tributylamin, N,N-Dimethylanilin, N Ethylpiperidin oder N, N'-Dimethylpiperazin. Geeignete Katalysatoren sind auch die in der GB 2 221 465 beschriebenen tertiären Hydroxyalkylamine, wie z.B. Triethanolamin, N Methyl-diethanolamin, Dimethylethanolamin, N-Isopropyldiethanolamin und 1-(2-Hydroxyethyl)pyrrolidin, oder die aus der GB 2 222 161 bekannten, aus Gemischen tertiärer bicyclischer Amine, wie z.B. DBU, mit einfachen niedermolekularen aliphatischen Alkoholen bestehenden Katalysatorsysteme.

Als Trimerisierungskatalysatoren für das erfindungsgemäße Verfahren ebenfalls geeignet ist eine Vielzahl unterschiedlicher Metallverbindungen. Geeignet sind beispielsweise die in der DE-A 3 240 613 als Katalysatoren beschriebenen Oktoate und Naphthenate von Mangan, Eisen, Cobalt, Nickel, Kupfer, Zink, Zirkonium, Cer oder Blei oder deren Gemische mit Acetaten von Lithium, Natrium, Kalium, Calcium oder Barium, die aus DE-A 3 219 608 bekannten Natrium- und Kalium-Salze von linearen oder verzweigten Alkancarbonsäuren mit bis zu 10 C-Atomen, wie z.B. von Propionsäure, Buttersäure, Valeriansäure, Capronsäure, Heptansäure, Caprylsäure, Pelargonsäure, Caprinsäure und Undecylsäure, die aus der EP-A 0 100 129 bekannten Alkali- oder Erdalkalimetallsalze von aliphatischen, cycloaliphatischen oder aromatischen Mono- und Polycarbonsäuren mit 2 bis 20 C-Atomen, wie z.B. Natrium- oder Kaliumbenzoat, die aus der GB-PS 1 391 066 und GB-PS 1 386 399 bekannten Alkaliphenolate, wie z.B. Natrium- oder Kaliumphenolat, die aus der GB 809 809 bekannten Alkali- und Erdalkalioxide, -hydroxide, -carbonate, -alkoholate und -phenolate, Alkalimetallsalze von enolisierbaren Verbindungen sowie Metallsalze schwacher aliphatischer bzw. cycloaliphatischer Carbonsäuren, wie z.B. Natriummethoxid, Natriumacetat, Kaliumacetat, Natriumacetoessigester, Blei-2-ethylhexanoat und Bleinaphthenat, die aus der EP-A 0 056 158 und EP-A 0 056 159 bekannten, mit Kronenethern oder Polyetheralkoholen komplexierten basischen Alkalimetallverbindungen, wie z.B. komplexierte Natrium- oder Kaliumcarboxylate, das aus der EP-A 0 033 581 bekannte Pyrrolidinon-Kaliumsalz, die aus der Anmeldung EP 13196508.9 bekannten ein- oder mehrkernigen Komplexverbindung von Titan, Zirkonium und/oder Hafnium, wie z.B. Zirkoniumtetra-n-butylat, Zirkoniumtetra-2-ethylhexanoat und Zirkoniumtetra-2-ethylhexylat, sowie Zinnverbindungen der in European Polymer Journal, Vol. 16, 147 - 148 (1979) beschriebenen Art, wie z.B. Dibutylzinndichlorid, Diphenylzinndichlorid, Triphenylstannanol, Tributylzinnacetat, Tributylzinnoxid, Zinndioktoat, Dibutyl(dimethoxy)stannan und Tributylzinnimidazolat.

Weitere für das erfindungsgemäße Verfahren geeignete Trimerisierungskatalysatoren sind beispielsweise die aus der DE-A 1 667 309, EP-A 0 013 880 und EP-A 0 047 452 bekannten quaternären Ammoniumhydroxyde, wie z.B. Tetraethylammoniumhydroxid, Trimethylbenzylammoniumhydroxid, N,N-Dimethyl-N-dodecyl-N-(2-hydroxyäthyl)ammoniumhydroxid, N-(2-Hydroxyäthyl)-N,N-dimethylN-(2,2'-dihydroxymethylbutyl)-ammoniumhydroxid und 1-(2-Hydroxyethyl)-1,4-diazabicyclo-[2.2.2]-octanhydroxid (Monoaddukt von Äthylenoxid und Wasser an 1,4-Diazabicyclo-[2.2.2]-octan), die aus EP-A 37 65 oder EP-A 10 589 bekannten quaternären Hydroxyalkylammoniumhydroxide, wie z.B. N,N,N-Trimethyl-N-(2-hydroxyäthyl)-ammoniumhydroxid, die aus DE-A 2631733, EP-A 0 671 426, EP-A 1 599 526 und US 4,789,705 bekannten Trialkylhydroxylalkylammoniumcarboxylate, wie z.B. N,N,N-Trimethyl-N-2-hydroxypropylammonium-p-tert.-butylbenzoat und N,N,N-Trimethyl-N-2-hydroxypropylammonium-2-ethylhexanoat, die aus der EP-A 1 229 016 bekannten quartären Benzylammoniumcarboxylate, wie z.B. N-Benzyl-N,N-dimethyl-N-ethylammoniumpivalat, N-Benzyl-N,N-dimethyl-N-ethylammonium-2-ethylhexanoat, N-Benzyl-N,N,N-tributylammonium-2-ethylhexanoat, N,N-Dimethyl-N-ethyl-N-(4-methoxybenzyl)ammonium-2-ethylhexanoat oder N,N,N-Tributyl-N-(4-methoxybenzyl)ammonium-pivalat, die aus der WO 2005/087828 bekannten tetrasubstituierten Ammonium-α-hydroxycarboxylate, wie z.B. Tetramethylammonium-lactat, die aus der EP-A 0 339 396, EP-A 0 379 914 und EP-A 0 443 167 bekannten quartären Ammonium- oder Phosphoniumfluoride, wie z.B. N-Methyl-N,N,N-trialkylammoniumfluoride mit C8-C10-Alkylresten, N,N,N,N-Tetra-n-butylammoniumfluorid, N,N,N-Trimethyl-N-benzylammonium-fluorid, Tetramethylphosphonium-fluorid, Tetraethylphosphoniumfluorid oder Tetra-n-butylphosphoniumfluorid, die aus der EP-A 0 798 299, EP-A 0 896 009 und EP-A 0 962 455 bekannten quaternären Ammonium- und Phosphoniumpolyfluoride, wie z.B. Benzyl-trimethylammoniumhydrogenpolyfluorid, die aus der EP-A 0 668 271 bekannten Tetraalkylammoniumalkylcarbonate, die durch Umsetzung tertiärer Amine mit Dialkylcarbonaten erhältlich sind, oder betainstrukturierte Quartär-Ammonioalkylcarbonate, die aus der WO 1999/023128 bekannten quaternären Ammoniumhydrogencarbonate, wie z.B. Cholinbicarbonat, die aus der EP 0 102 482 bekannten, aus tertiären Aminen und alkylierend wirkenden Estern von Säuren des Phosphors erhältlichen quartären Ammoniumsalze, wie z.B. Umsetzungsprodukte von Triethylamin, DABCO oder N-Methylmorpholin mit Methanphosphonsäuredimethylester, oder die aus WO 2013/167404 bekannten tetrasubstituierten Ammoniumsalze von Lactamen, wie z.B. Trioctylammoniumcaprolactamat oder Dodecyltrimethylammoniumcaprolactamat.

Weitere erfindungsgemäß geeignete Trimerisierungskatalysatoren C finden sich beispielsweise in J. H. Saunders und K. C. Frisch, Polyurethanes Chemistry and Technology, S. 94 ff (1962) und der dort zitierten Literatur.

Besonders bevorzugt sind Carboxylate und Phenolate mit Metall- oder Ammoniumionen als Gegenion. Geeignete Carboxylate sind die Anionen aller aliphatischen oder cycloaliphatischen Carbonsäuren, bevorzugt solcher mit Mono- oder Polycarbonsäuren mit 1 bis 20 C-Atomen. Geeignete Metallionen sind abgeleitet von Alkali- oder Erdalkalimetallen, Mangan, Eisen, Cobalt, Nickel, Kupfer, Zink, Zirkonium, Cer, Zinn, Titan, Hafnium oder Blei. Bevorzugte Alkalimetalle sind Lithium, Natrium und Kalium, besonders bevorzugt Natrium und Kalium. Bevorzugte Erdalkalimetalle sind Magnesium, Calcium, Strontium und Barium.

Ganz besonders bevorzugt sind die in der DE-A 3 240 613 als Katalysatoren beschriebenen Oktoate und Naphthenate von Mangan, Eisen, Cobalt, Nickel, Kupfer, Zink, Zirkonium, Cer oder Blei oder deren Gemische mit Acetaten von Lithium, Natrium, Kalium, Calcium oder Barium.

Ebenfalls ganz besonders bevorzugt sind Natrium- oder Kaliumbenzoat, die aus der GB-PS 1 391 066 und GB-PS 1 386 399 bekannten Alkaliphenolate, wie z. B. Natrium- oder Kaliumphenolat, sowie die aus der GB 809 809 bekannten Alkali- und Erdalkalioxide, -hydroxide, -carbonate, -alkoholate und - phenolate.

Der Trimerisierungskatalysator C enthält vorzugsweise einen Polyether. Dies ist insbesondere bevorzugt, wenn der Katalysator Metallionen enthält. Bevorzugte Polyether sind ausgewählt aus der Gruppe bestehend aus Kronenether, Diethylenglycol, Polyethylen- und Polypropylenglykolen. Als besonders praxisgerecht hat es sich im erfindungsgemäßen Verfahren erwiesen einen Trimerisierungskatalysator B einzusetzen, der als Polyether ein Polyethylenglykol oder einen Kronenether, besonders bevorzugt 18-Krone-6 oder 15-Krone-5, enthält. Bevorzugt enthält der Trimiersierungskatalysator B ein Polyethylenglykol mit einem zahlenmittleren Molekulargewicht von 100 bis 1000 g/mol, bevorzugt 300 g/mol bis 500 g/mol und insbesondere 350 g/mol bis 450 g/mol.

Ganz besonders bevorzugt ist die Kombination aus den oben beschriebenen Carboxylaten und Phenolaten von Alkali- oder Erdalkalimetallen mit einem Polyether.

Weiterhin hat sich gezeigt, dass Verbindungen gemäß der unten stehenden Formel (I) besonders gut als Katalysatoren C geeignet sind 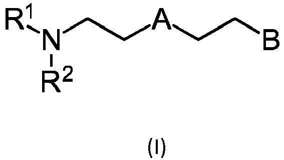
Wobei R¹ und R² unabhängig voneinander ausgewählt sind aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl;
A ausgewählt ist aus der Gruppe bestehend aus O, S und NR³, wobei R³ ausgewählt ist aus der Gruppe bestehend aus Wasserstoff, Methyl, Ethyl, Propyl, Isopropyl, Butyl und Isobutyl; und
B unabhängig von A ausgewählt ist aus der Gruppe bestehend aus OH, SH NHR⁴ und NH₂, wobei R⁴ ausgewählt ist aus der Gruppe bestehend aus Methy, Ethyl und Propyl

In einer bevorzugten Ausführungsform ist A NR³, wobei R³ ausgewählt ist aus der Gruppe bestehend aus Wasserstoff, Methyl, Ethyl, Propyl, Isopropyl, Butyl und Isobutyl. Bevorzugt ist R³ Methyl oder Ethyl. Besonders bevorzugt ist R³ Methyl.

In einer ersten Variante dieser Ausführungsform ist B OH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer zweiten Variante dieser Ausführungsform ist B SH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer dritten Variante dieser Ausführungsform ist B NHR⁴ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl. In dieser Variante ist R4 ausgewählt aus der Gruppe bestehend aus Methyl, Ethyl und Propyl. Bevorzugt ist R⁴ Methyl oder Ethyl. Besonders bevorzugt ist R⁴ Methyl.

In einer vierten Variante dieser Ausführungsform ist B NH₂ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer weiteren bevorzugten Ausführungsform ist A Sauerstoff.

In einer ersten Variante dieser Ausführungsform ist B OH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer zweiten Variante dieser Ausführungsform ist B SH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer dritten Variante dieser Ausführungsform ist B NHR⁴ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl. In dieser Variante ist R⁴ ausgewählt aus der Gruppe bestehend aus Methyl, Ethyl und Propyl. Bevorzugt ist R⁴ Methyl oder Ethyl. Besonders bevorzugt ist R⁴ Methyl.

In einer vierten Variante dieser Ausführungsform ist B NH₂ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In noch einer weiteren bevorzugten Ausführungsform ist A Schwefel.

In einer ersten Variante dieser Ausführungsform ist B OH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer zweiten Variante dieser Ausführungsform ist B SH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer dritten Variante dieser Ausführungsform ist B NHR⁴ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl. In dieser Variante ist R⁴ ausgewählt aus der Gruppe bestehend aus Methyl, Ethyl und Propyl. Bevorzugt ist R⁴ Methyl oder Ethyl. Besonders bevorzugt ist R⁴ Methyl.

In einer vierten Variante dieser Ausführungsform ist B NH₂ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

Weiterhin geeignet sind Addukte einer Verbindung gemäß Formel (I) und einer Verbindung mit wenigstens einer Isocyanatgruppe.

Unter dem Oberbegriff "Addukt" werden Urethan-, Thiourethan- und Harnstoffaddukte einer Verbindung gemäß Formel (I) mit einer Verbindung mit wenigstens einer Isocyanatgruppe verstanden. Besonders bevorzugt ist ein Urethanaddukt. Die erfindungsgemäßen Addukte entstehen dadurch, dass ein Isocyanat mit der funktionellen Gruppe B der in Formel (I) definierten Verbindung reagiert. Wenn B eine Hydroxylgruppe ist, so entsteht ein Urethanaddukt. Wenn B eine Thiolgruppe ist, entsteht ein Thiourethanaddukt. Und wenn B NH₂ oder NHR⁴ ist, entsteht ein Harnstoffaddukt.

### Komponente D

Die Komponente D ist eine Verbindung, die in einem Molekül wenigstens eine mit Isocyanat reaktive Gruppe wie weiter oben in dieser Anmeldung definiert und wenigstens eine ethylenische Doppelbindung aufweist. Die mit Isocyanat reaktive Gruppe der Komponente D kann auch eine Uretdiongruppe sein. Ethylenische Doppelbindungen sind vorzugsweise solche, die durch einen radikalischen Reaktionsmechanismus mit anderen ethylenischen Doppelbindungen vernetzbar sind. Entsprechende aktivierte Doppelbindungen sind für die Komponente B weiter oben in dieser Anmeldung näher definiert.

Bevorzugte Komponenten D sind Alkoxyalkyl(meth)acrylate mit 2 bis 12 Kohlenstoffatomen im Hydroxyalkylrest. Besonders bevorzugt sind 2-Hydroxyethylacrylat, das bei der Anlagerung von Propylenoxid an Acrylsäure entstehende Isomerengemisch oder 4-Hydroxybutylacrylat.

In einer bevorzugten Ausführungsform reagiert dabei die gegenüber Isocyanat reaktive Gruppe von D bevorzugt vor oder zeitgleich mit der Umsetzung der Doppelbindungen in Schritt b. Eine Vorreaktion der gegenüber Isocyanat reaktiven Gruppe von D mit A ist bevorzugt um die Kompatibilität der Reaktionskomponenten nach der radikalischen Polymerisation der Doppelbindungen zu verbessern. Besonders bevorzugt ist dies in Kombination mit einem geringen Gewichtsprozentanteil der Komponente D von weniger als 20 Gew% bevorzugt weniger als 10 Gew%, besonders bevorzugt weniger als 5 Gew% in der Reaktionsmischung, da sonst die Viskosität der Reaktionsmischung unkontrolliert über die Bildung von z.B. Urethangruppen steigen kann.

### Komponente E

Die Komponente E ist eine Verbindung, die in einem Molekül sowohl wenigstens eine Isocyanatgruppe und wenigstens eine ethylenische Doppelbindung aufweist. Sie kann vorteilhaft dadurch erhalten werden, dass eine im vorangehenden Abschnitt beschriebene Komponente D mit einem monomeren oder oligomeren Polyisocyanat wie weiter oben in dieser Anmeldung beschrieben vernetzt wird. Diese Vernetzung erfolgt durch Reaktion der mit Isocyanat reaktiven Gruppen, in diesem Fall insbesondere einer Hydroxyl-, Amino- oder Thiolgruppe, und einer Isocyanatgruppe des Polyisocyanats. Dies wird vorzugsweise durch eine Komponente G wie weiter unten in dieser Anmeldung katalysiert. Es ist aber auch jeder andere geeignete und dem Fachmann bekannte Katalysator denkbar. Auch kann gänzlich auf einen Katalysator verzichtet werden.

Besonders bevorzugt sind Kombinationen in denen ein auf Hexamethylendiisocyanat oder Pentamethylendiisocyanat basierendes oligomeres Polyisocyanat kombiniert wird mit einer Komponente D ausgewählt aus der Gruppe bestehend aus 2-Hydroxyethylacrylat, dem bei der Anlagerung von Propylenoxid an Acrylsäure entstehenden Isomerengemisch und 4-Hydroxybutylacrylat.

Weitere bevorzugte Komponenten E sind 2-Isocyanatoethyl(meth)acrylat, Tris(2-hydroxyethyl)isocyanattri(meth)acrylat, Vinylisocyante, Allylisocyante und 3-Isopropenyl-α,α-dimethylbenzylisocyanat

### Komponente F

Grundsätzlich kann die radikalische Polymerisation der im Reaktionsgemisch enthaltenen ethylenisch ungesättigten Verbindungen durch aktinische Strahlung mit ausreichendem Energiegehalt bewirkt werden. Dies ist insbesondere bei Gammastrahlung, Elektronenstrahlung, Protonenstrahlung und / oder UV-VIS Strahlung im Wellenbereich zwischen 200 und 500 nm möglich. In diesem Fall muss die erfindungsgemäße polymerisierbare Zusammensetzung keine Komponente F enthalten.

Wenn aber auf den Einsatz entsprechender Strahlung verzichtet werden soll, dann ist die Anwesenheit wenigstens einer Komponente F erforderlich, die als Initiator einer radikalischen Polymerisation der in der erfindungsgemäßen polymerisierbaren Zusammensetzung enthaltenen ethylenischen Doppelbindungen geeignet ist. Derartige Initiatoren wirken dadurch, dass sie unter geeigneten Bedingungen, insbesondere bei Erwärmen oder der Einwirkung geeigneter Strahlung, Radikale bilden, die mit den ethylenischen Doppelbindungen reagieren, so dass Vinylradikale entstehen, die ihrerseits in einer Kettenreaktion mit weiteren ethylenischen Doppelbindungen reagieren. Die Komponente F enthält wenigstens einen strahlenaktivierten Initiator F1 oder wenigstens einen temperaturaktivierten Initiator F2. Sie kann aber auch ein Gemisch aus wenigstens einem strahlenaktiviertem Initiator F1 und wenigstens einem temperaturaktivierten Initiator F2 enthalten.

In einer besonderen Ausführungsform sind auch redoxaktivierte Initiatoren F3 denkbar zusammengesetzt aus mindestens einem Oxidationsmittel und einem Reduktionsmittel. Beispielhaft seien genannt die Kombination aus Eisen(II)salzen und Hydroperoxide oder aus Kupfer(I)salzen und aktivierten Organochlorverbindungen, z.B. Benzylchlorid.

Grundsätzlich ist die Verwendung von strahlungsaktivierten Initiatoren F1 bevorzugt, da sich so die radikalische Polymerisation am besten auslösen lässt, ohne auch die Vernetzung der Isocyanatgruppen auszulösen. Es ist aber auch möglich, temperaturaktivierte Initiatoren F2 zu verwenden. Hier müssen dann der temperaturaktivierte Initiator F2 und der Trimerisierungskatalysator C so ausgewählt werden, dass der Trimerisierungskatalysator C bei der Temperatur, welche die radikalische Polymerisation auslöst, noch keine wesentliche Aktivität zeigt. Dies ist durch einfache Vorversuche überprüfbar.

Bei der Auswahl geeigneter Initiatoren F2 und Trimerisierungskatalysatoren C ist darauf zu achten, dass zwischen der Zerfallstemperatur des Initiators F2 und der Aktivierungstemperatur des Trimerisierungskatalysators C eine Temperaturdiferenz von wenigstens 5°C, bevorzugt wenigstens 10°C und ganz besonders bevorzugt wenigstens 20°C liegt. Als Aktivierungstemperatur wird in diesem Fall eine Temperatur verstanden, bei der innerhalb von höchstens einer Stunde wenigstens 10 % der Isocyanatgruppen umgesetzt werden. Die Umsetzung der Isocyanatgruppen kann dabei an der Abnahme der Peakhöhe des Isocyanatpeaks (normiert auf die Peakhöhe der CH Schwingung) mittels ATR-IR Spektroskopie verfolgt werden.

Bevorzugte strahlungsaktivierte Initiatoren F1 sind Verbindungen des unimolekularen Typs (I) und des bimolekularen Typs (II). Geeignete Typ (I)-Systeme sind aromatische Ketonverbindungen, wie z.B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind Typ (II)-Initiatoren wie Benzoin und seine Derivate, Benzilketale, Acylphosphinoxide, 2,4,6-Trimethyl-benzoyldiphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Spezielle Beispiele sind Irgacur^{®}500 (eine Mischung von Benzophenon und (1-Hydroxycyclohexyl)phenylketon, Fa. Ciba, Lampertheim, DE), Irgacure^{®}819 DW (Phenylbis-(2, 4, 6-trimethylbenzoyl)phosphinoxid, Fa. Ciba, Lampertheim, DE) oder Esacure^{®} KIP EM (Oligo-[2-hydroxy-2-methyl-1-[4-(1-methylvinyl)-phenyl]-propanone], Fa. Lamberti, Aldizzate, Italien) und Bis-(4-methoxybenzoyl)diethylgerman. Es können auch Gemische dieser Verbindungen eingesetzt werden.

Bei den Photoinitiatoren sollte darauf geachtet werden, dass sie eine ausreichende Reaktivität gegenüber der verwendeten Strahlenquelle haben. Es ist eine Vielzahl von Photoinitiatoren auf dem Markt bekannt. Durch kommerziell verfügbare Photoinitiatoren wird der Wellenlängenbereich im gesamten UV-VIS Spektrum abgedeckt.

Bevorzugte temperaturaktivierte Initiatoren F2 sind organische Azoverbindungen, organische Peroxiden und C-C-spaltenden Initiatoren, wie Benzpinakolsilylether, N,N-Diacyl-Hydroxylamine, O-alkylierte N,N-Diacyl-Hydroxylamine oder O-acylierte N,N-Diacyl-Hydroxylamine. Ebenfalls geeignet sind anorganische Peroxide wie Peroxodisulfate. Weitere geeignete thermische Radikalstarter sind Azobisisobutyronitril (AIBN), Dibenzoylperoxid (DBPO), Di-tert-butylperoxid, Dicumylperoxid (DCP) und Peroxybenzoesäure-tert-butylester. Der Fachmann kann aber auch alle anderen ihm bekannten thermischen Initiatoren einsetzen.

### Additive G

In einer weiteren Ausführungsform der vorliegenden Erfindung enthält das Reaktionsgemisch zusätzlich wenigstens ein Additiv G ausgewählt aus der Gruppe bestehend aus Pigmenten, Farbstoffen, organischen Füllstoffen, anorganischen Füllstoffen, Verlaufsmitteln und Verdickern.

### Faser

Die erfindungsgemäß einsetzbare Faser kann aus allen dem Fachmann bekannten anorganischen Fasern, organischen Fasern, Naturfasern oder deren Mischungen ausgewählt werden. Besagte Faser kann weitere Stoffe enthalten, die z.B. als Schlichten dienen.

Bevorzugte anorganische Fasern sind Glasfasern, Basaltfasern, Borfasern, Keramikfasern, Whisker, Kieselsäurefasern sowie metallische Verstärkungsfasern. Bevorzugte organische Fasern sind Aramidfasern, Kohlenstofffasern, Kohlenstoffnanoröhrchen, Polyester-Fasern, Polyethylenfasern, Nylon-Fasern sowie Plexiglas-Fasern. Bevorzugte Naturfasern sind Flachs-Fasern, Hanf-Fasern, Holzfasern, Cellulosefasern sowie Sisalfasern.

Erfindungsgemäß sind alle Fasern geeignet, deren Aspektverhältnis, größer 1000, bevorzugt größer 5000, stärker bevorzugt größer 10.000 und am stärksten bevorzugt größer 50.000 ist. Das Aspektverhältnis ist definiert als die Länge der Faser geteilt durch den Durchmesser. Die Fasern weisen bei Einhaltung des oben definierten Aspektverhältnisses bevorzugt eine Mindestlänge von 1 m, besonders bevorzugt 50 m und ganz besonders bevorzugt 100 m auf. Die einzelnen Fasern haben vorzugsweise einen Durchmesser von weniger 0,1 mm, stärker bevorzugt weniger 0,05 mm, und noch stärker bevorzugt weniger 0,03 mm.

Die Fasern können einzeln vorliegen, sie können aber auch in jeder dem Fachmann bekannten Form zu Matten oder Fliesen gewebt oder gewirkt oder als Gelege vorliegen.

Das Verhältnis zwischen dem Reaktionsgemische, den Fasern und allen weiteren Bestandteilen des Halbzeugs wird vorzugsweise so gewählt, dass der Fasergehalt wenigstens 10 Vol.-%, bevorzugt 20 Vol.-%, stärker bevorzugt wenigstens 30 Vol.-%, noch stärker bevorzugt wenigstens 40 Vol.-% und am stärksten bevorzugt wenigstens 50 Vol.-% des fertigen Halbzeugs beträgt.

### Benetzung der Faser

Die Benetzung der Fasern kann mit allen dem Fachmann bekannten Verfahren erfolgen, die eine gute Benetzung der Faser mit dem Reaktionsgemisch ermöglichen. Genannt seien hier ohne Anspruch auf Vollständigkeit Rakeln, Tauchbad, Injektionsbox, Sprühverfahren, Harzinjektionsverfahren, Harzinfusionsverfahren mit Vakuum oder Druck, Auftragrolle und Handlaminationsverfahren.

Gemäß einer besonders bevorzugten Ausführungsform der Erfindung wird ein Tauchbad verwendet. Dabei werden die trockenen Fasern durch ein offenes Harzbad gezogen, wobei die Umlenkung der Fasern über Führungsblenden in und aus dem Harzbad erfolgt (Wannenverfahren). Alternativ dazu können die Fasern auch ohne Umlenkung gerade durch die Imprägniervorrichtung gezogen werden (Durchziehverfahren).

Gemäß einer weiteren besonders bevorzugten Ausführungsform der Erfindung wird eine Injektionsbox verwendet. Bei der Injektionsbox werden die Fasern ohne Umlenkung in die Imprägniereinheit eingezogen, die bereits die Form des späteren Profils aufweist. Mittels Druck wird die reaktive Harzmischung in die Box, bevorzugt transversal zur Faserrichtung, gepumpt.

### Radikalische Polymerisation

Die Vernetzung der in der erfindungsgemäßen polymerisierbaren Zusammensetzung enthaltenen ethylenischen Doppelbindungen erfolgt durch eine radikalische Polymerisation. Diese Polymerisationsreaktion wird, wenn ein strahlenaktivierter Initiator F1 anwesend ist, erfindungsgemäß durch den Einsatz von Strahlung, die die zu dessen Aktivierung geeignet ist, eingeleitet. Wenn ein temperaturaktivierter Initiator F2 in der verwendeten polymerisierbaren Zusammensetzung anwesend ist, wird die Vernetzung der ethylenischen Doppelbindungen durch Aufheizen der polymerisierbaren Zusammensetzung auf die erforderliche Temperatur gestartet. Grundsätzlich genügt aber - unabhängig von der Anwesenheit von Initiatoren F1 oder F2 - auch der Einsatz von hinreichend energiereicher Strahlung wie weiter oben in dieser Anmeldung definiert zur Einleitung der radikalischen Polymerisation.

Das erhaltene Halbzeug ist in jedem Fall bevorzugt kühl bei einer Temperatur, bei der die Isocyanat Additionsreaktion nur langsam oder gar nicht fortschreitet, zu lagern. Dazu wird vorteilhaft eine Temperatur als Lagertemperatur gewählt die um wenigstens 10 °C bevorzugt um wenigstens 30 °C und ganz besonders bevorzugt um wenigstens 50 °C unterhalb der Aktivierungstemperatur des Trimerisierungskatalysators C liegt.

In einer besonderen Ausführungsform der Erfindung kann es allerdings gewünscht sein, dass die Umsetzung der radikalischen Doppelbindungen und die Isocyanatreaktion fast zeitgleich erfolgen. In diesem Fall wird die Massetemperatur der Reaktionsmischung bzw. der benetzten Faser Gelege, Gewebe, entsprechend angepasst so dass eine radikalische Polymerisation und Isocyanat Additionsreaktion parallel nebeneinander erfolgen.

### Halbzeug

Das Produkt des erfindungsgemäßen Verfahrens ist ein Halbzeug. Dieses durch das erfindungsgemäße Verfahren erhältliche Halbzeug ist Gegenstand einer weiteren Ausführungsform der vorliegenden Erfindung.

"Halbzeug" im Sinne dieser Anmeldung bedeutet, dass besagtes Produkt bereits eine geometrisch bestimmte Form hat, aber erst durch einen weiteren Verfahrensschritt, in dem die im Halbzeug vorliegenden Isocyanatgruppen durch Polyaddition miteinander vernetzt werden, seine endgültige Festigkeit erhält.

Da das Reaktionsgemisch im erfindungsgemäßen Halbzeug noch nicht vollständig ausgehärtet ist, kann das Halbzeug zwischen der radikalischen Polymerisation der ethylenisch ungesättigten Doppelbindungen und der Polyaddition der Isocyanatgruppen umgeformt werden. Dies kann beispielsweise durch Biegen oder Pressen erfolgen. Die Umformung kann auch zu Beginn der Vernetzung der Isocyanatgruppen erfolgen.

### Vernetzung der Isocyanatgruppen

Die "Vernetzung" der Isocyanatkomponente A ist ein Prozess, in dem die darin enthaltenen Isocyanatgruppen unter Ausbildung wenigstens einer Struktur ausgewählt aus der Gruppe bestehend aus Uretdion-, Isocyanurat-, Allophanat-, Biuret-, Iminooxadiazindion- und Oxadiazintrionstrukturen miteinander oder mit bereits vorliegenden Urethangruppen reagieren. Hierbei werden die in der Isocyanatkomponente A ursprünglich vorliegenden Isocyanatgruppen verbraucht. Durch die Ausbildung der vorgenannten Gruppen werden die in Isocyanatkomponente A enthaltenen monomeren und oligomeren Polyisocyanate zu einem Polymernetzwerk verbunden.

Da im Reaktionsgemisch erfindungsgemäß ein deutlicher molarer Überschuss von Isocyanatgruppen gegenüber mit Isocyanat reaktiven Gruppen vorliegt, führt die Vernetzungsreaktion dazu, dass am Ende der Vernetzung höchstens 50 %, bevorzugt höchstens 30 %, besonders bevorzugt höchstens 10 %, ganz besonders bevorzugt höchstens 5 % und insbesondere höchstens 3 % der reaktiven Isocyanatgruppen nach Umsetzung als Urethan- und/oder Allophanatgruppen vorliegen
In einer besonders bevorzugten Ausführungsform der Erfindung ist die ausgehärtete Isocyanatkomponente A aber nicht vollständig frei von Urethan- und Allophanatgruppen. Bevorzugt enthält sie deswegen unter Beachtung der im vorangehenden Absatz definierten Obergrenzen wenigstens 0,1 % Urethan- und/oder Allophanatgruppen bezogen auf den Gesamtstickstoffgehalt.

Es ist bevorzugt, dass die Vernetzung der im Reaktionsgemisch enthaltenen Isocyanatgruppen vorwiegend durch Cyclotrimerisierung von mindestens 50 %, vorzugsweise mindestens 60 %, besonders bevorzugt mindestens 70 %, insbesondere mindestens 80 % und ganz besonders bevorzugt 90 % der in der Isocyanatkomponente A vorliegenden freien Isocyanatgruppen zu Isocyanuratstruktureinheiten erfolgt. Somit sind im fertigen Werkstoff entsprechende Anteile des in der Isocyanatkomponente A ursprünglich enthaltenen Stickstoffs in Isocyanuratstrukturen gebunden. Nebenreaktionen, insbesondere solche zu Uretdion-, Allophanat-, und/oder Iminooxadiazindionstrukturen treten jedoch üblicherweise auf und können sogar gezielt genutzt werden, um z.B. die Glasübergangstemperatur (Tg) des erhaltenen Polyisocyanuratkunststoffs vorteilhaft zu beeinflussen. Der oben definierte Gehalt an Urethan- und/oder Allophanatgruppen liegt jedoch vorzugsweise auch in dieser Ausführungsform vor.

Die Vernetzung der Isocyanatgruppen erfolgt vorzugsweise bei Temperaturen zwischen 50 °C und 300 °C, stärker bevorzugt zwischen 80 °C und 250 °C und noch stärker bevorzugt zwischen 100 °C und 220 °C.

Die oben genannten Temperaturen werden bei der Vernetzung der Isocyanatgruppen gehalten, bis wenigstens 50 %, bevorzugt wenigstens 75 % und noch stärker bevorzugt wenigstens 90 % der zu Beginn der Vernetzung der Isocyanatgruppen im erfindungsgemäßen Halbzeug vorliegenden freien Isocyanatgruppen verbraucht sind. Der Prozentsatz an noch vorhandenen Isocyanat-Gruppen kann durch einen Vergleich des Gehalts an Isocyanat-Gruppen in Gew.-% in der zu Beginn der Vernetzung der Isocyanatgruppen vorliegenden Isocyanatkomponente A mit dem Gehalt an Isocyanat-Gruppen in Gew.-% im Reaktionsprodukt, beispielsweise durch vorgenannten Vergleich der Intensität der Isocyanatbande bei ca. 2270 cm⁻¹ mittels ATR-IR-Spektroskopie, bestimmt werden.

Die genaue Zeitdauer der Vernetzung der Isocyanatgruppen hängt dabei natürlich von der Geometrie des anzufertigenden Werkstücks, insbesondere dem Verhältnis von Oberfläche und Volumen, ab, da auch im Kern des entstehenden Werkstücks die erforderliche Temperatur für die erforderliche Mindestdauer erreicht werden muss. Der Fachmann kann diese Parameter durch einfache Vorversuche bestimmen.

Grundsätzlich wird eine Vernetzung der oben genannten Anteile freier Isocyanatgruppen erreicht, wenn die oben genannten Temperaturen für 1 Minute bis 4 Stunden gehalten werden. Besonders bevorzugt ist eine Zeitdauer zwischen 1 Minute und 15 Minuten bei Temperaturen zwischen 180 °C und 220 °C oder eine Zeitdauer von 5 Minuten bis 120 Minuten bei einer Temperatur zwischen 120°C und-150 °C.

Das erfindungsgemäße Halbzeug ist lager- und transportfähig. Es kann deswegen zentral vorproduziert werden und anschließend an die Orte transportiert werden, an denen es weiter verarbeitet werden soll. Deswegen erfolgt in einer bevorzugten Ausführungsform der vorliegenden Erfindung die Vernetzung der Isocyanatgruppen nicht an dem Ort, an dem das Halbzeug hergestellt wird.

Zwischen dem Ort, an dem das erfindungsgemäße Halbzeug hergestellt wird, und dem Ort, an dem die Vernetzung der im Halbzeug enthaltenen Isocyanatgruppen durchgeführt wird, liegen bevorzugt wenigstens 10 m, stärker bevorzugt wenigstens 50 m, noch stärker bevorzugt wenigstens 500 m und am stärksten bevorzugt wenigstens 1.000 m.

Das erfindungsgemäße Halbzeug ist über Tage oder Wochen haltbar unter Luftausschluss, wenn die Umgebungstemperatur bei höchstens 60 °C, bevorzugt höchstens 40 °C, besonders bevorzugt höchstens 30 °C und ganz besonders bevorzugt höchstens 25 °C liegt.

In einer besonders bevorzugten Ausführungsform der vorliegenden Erfindung liegt zwischen der Herstellung des erfindungsgemäßen Halbzeugs und der Vernetzung der darin enthaltenen Isocyanatgruppen ein zeitlicher Abstand von 12 Stunden bis 1 Jahr, bevorzugt von 2 Tagen bis 6 Monaten, stärker bevorzugt von 3 Tagen bis 3 Monaten und insbesondere von mindestens 7 Tagen bis 2 Monaten, in denen das Halbzeug bei Temperaturen von höchstens 30 °C, bevorzugt höchstens 20 °C gelagert wird. Eine kurzfristige Überschreitung der vorgenannten Lagertemperaturen ist solange unschädlich, wie die Kombination aus Ausmaß und Dauer der Temperaturerhöhung nicht zu einer Vernetzung von mehr als 10 % der im Halbzeug vorhandenen Isocyanatgruppen führt bzw. sich der Tg des Halbzeugs nicht um mehr als 20 °C erhöht. Eine "Lagerung" im Sinne dieser Patentanmeldung schließt eine Ortsveränderung, d.h. einen Transport wie weiter oben definiert, ein.

In einer weiteren Ausführungsform betrifft die vorliegende Erfindung einen Verbundwerkstoff, der durch die Vernetzung der im erfindungsgemäßen Halbzeug vorliegenden Isocyanatgruppen erhältlich ist.

Die nachfolgenden Ausführungsbeispiele dienen nur dazu, die Erfindung zu illustrieren. Sie sollen den Schutzumfang der Patentansprüche in keiner Weise beschränken.

### Beispiele

### Allgemeine Angaben:

Alle Prozentangaben beziehen sich, sofern nicht abweichend angegeben, auf Gewichtsprozent (Gew.-%).

Die zur Zeit der Versuchsdurchführung herrschende Umgebungstemperatur von 23 °C wird als RT (Raumtemperatur) bezeichnet.

Die nachstehend aufgeführten Methoden zur Bestimmung der entsprechenden Parameter wurden zur Durchführung bzw. Auswertung der Beispiele angewendet und sind auch die Methoden zur Bestimmung der erfindungsgemäß relevanten Parameter im Allgemeinen.

### Bestimmung der Phasenübergänge mittels DSC

Die Phasenübergänge wurde mittels DSC (Differential Scanning Calorimetry) mit einem Mettler DSC 12E (Mettler Toledo GmbH, Gießen, DE) entsprechend DIN EN 61006 bestimmt. Eine Kalibrierung erfolgte durch die Temperatur des Schmelz-Onsets von Indium und Blei. Es wurden 10 mg Substanz in Normalkapseln eingewogen. Die Messung erfolgte durch drei Aufheizungen von -50 °C bis +200 °C bei einer Heizrate von 20 K/min mit anschließender Abkühlung mit einer Kühlrate von 320 K/min. Die Kühlung erfolgte durch flüssigen Stickstoff. Als Spülgas wurde Stickstoff verwendet. Die angegebenen Werte basieren jeweils auf der Auswertung der 1. Aufheizkurve, da bei den untersuchten Reaktivsystemen durch die Temperaturbelastung in der DSC Veränderungen der Probe im Messprozess bei hohen Temperaturen möglich sind. Die Schmelztemperaturen Tₘ wurden aus den Temperaturen an den Maxima der Wärmeflusskurven erhalten. Die Glasübergangstemperatur T_{g} wurde aus der Temperatur bei der halben Höhe einer Glasübergangsstufe erhalten.

### Bestimmung von Infrarotspektren

Die Infrarotspektren wurden an einem mit einer ATR-Einheit ausgerüstetem FT-IR-Spektrometer der Firma Bruker gemessen.

### Ausgangsverbindungen

Polyisocyanat A1: HDI-Trimerisat (NCO-Funktionalität >3) mit einem NCO-Gehalt von 23,0 Gew.-% von der Fa. Covestro AG. Die Viskosität beträgt ca. 1200 mPa·s bei 23°C (DIN EN ISO 3219/A.3). Polyisocyanat A2: PDI-Trimerisat (NCO-Funktionalität >3) mit einem NCO-Gehalt von 21,5 Gew.-% von der Fa. Covestro AG. Die Viskosität beträgt ca. 9500 mPa·s bei 23 °C (DIN EN ISO 3219/A.3).

Hexandioldiacrylat (HDDA) wurde mit einer Reinheit von 99 Gew.-% von der Fa. abcr GmbH oder in einer Reinheit von ≤ 100 Gew.-% von der Fa. Sigma-Aldrich bezogen.

Butandioldimethacrylat (BDDMA) wurde mit einer Reinheit von 95 Gew.-% von der Fa. Sigma Aldrich bezogen.

Hydroxypropylmethacrylat (HPMA) wurde mit einer Reinheit von 98 Gew.-% von der Fa. abcr GmbH. bezogen.

Isobornylmethacrylat (IBOMA) wurde mit einer Reinheit von ≤ 100 Gew.-% von der Fa. Sigma Aldrich bezogen.

Initiator: Omnirad BL 723 (eine Mischung aus 30-60% 2-Hydroxy-2methylpropiophenon, 10-30% (2,4,6-Trimethylbenzoyl)-phenylphosphinsäureethylester, 10-30% Oligo[2-hydroxy-2-methyl-1-[4-(1-methylvinyl)phenyl]propanon]) wurde von IGM Resins b.v. bezogen.

Kaliumacetat wurde mit einer Reinheit von > 99 Gew.-% von der Fa. ACROS bezogen.

Polyethylenglycol (PEG) 400 wurde mit einer Reinheit von > 99 Gew.-% von der Fa. ACROS bezogen.

N,N,N'-Trimethylaminoethyl-ethanolamin mit einer OH-Zahl von 384 mg KOH/g wurde von der Firma Huntsman Corporation bezogen.

Zinkstearat wurde mit einem Zinkanteil von 10-12% von der Firma Sigma-Aldrich bezogen.

Glasfasermatte: Es wurde die Glasfasermatte 90070 (US Type 1610) in Leinwandbindung der Firma P-D INTERGLAS TECHNOLOGIES GmbH mit einem Gewicht von 82 g/m² verwendet.

Alle Rohstoffe mit Ausnahme des Katalysators wurden vor Verwendung im Vakuum entgast, das Polyethylenglycol zusätzlich getrocknet.

### Herstellung von Katalysator K1:

Zu dem Isocyanat A1 (18,3 g) wurde der N,N,N'-Trimethylaminoethyl-ethanolamin (14,6 g) unter Kühlung zugetropft und solange gerührt, bis die Mischung homogen war.

### Herstellung von Katalysator K2:

Kaliumacetat (5,0 g) wurde in dem PEG 400 (95,0 g) bei RT solange gerührt, bis alles gelöst war. Es wurde so eine 5 Gew.-% Lösung von Kaliumacetat in PEG 400 erhalten und ohne weitere Behandlung als Katalysator eingesetzt.

### Herstellung der Reaktionsmischung

Wenn nicht anders angegeben wurde zur Herstellung der Polyisocyanuratkomposite zunächst die Isocyanatzusammensetzung durch Vermischen der entsprechenden Isocyanatkomponenten (A1 oder A2) mit einer entsprechenden Menge Katalysator (K1-K2), Initiator und Acrylat bei 23 °C in einem Speedmixer DAC 150.1 FVZ der Fa. Hauschild für 120 Sekunden bei 1500 min⁻¹ hergestellt. Diese wurde dann mit dem Katalysator bei RT vermischt (Speedmixer).

Anschließend wurde die Mischung in eine Form (Metalldeckel, ca. 6 cm im Durchmesser und ca. 1 cm hoch) verbracht und im Ofen ausgehärtet.

### Herstellung eines Komposits

Zur Herstellung eines Komposits wurde die zuvor hergestellte Reaktionsmischung auf eine silikoniserte PP-Folie mit einer Schichtdicke von 100 µm aufgerakelt. Anschließend wurde eine Glasfasermatte in die Reaktionsmischung gelegt und eine weitere silikoniserte PP-Folie aufgelegt. Das Foliensandwich wird mit einer Rolle gewalzt und anschließend mit einer Gallium- und Quecksilberdotierten Lampe in einem Wellenlängenbereich von 200 bis 380 nm und einer Leistung von 1300 mJ/cm² in einem Gerät der Firma superfici angehärtet. Anschließend werden 25 Lagen des angehärteten Komposits gestapelt und bei 40 bar und 200 °C für 10 min in einem Gerät der Firma Wickert verpresst.

### Ausführungsbeispiel 1

Es wurden 18,125 g Polyisocyanat A2, 0,750 g Katalysator K2, 0,160 g Initiator, 0,250 g HPMA, je 2,575 g HDDA und IBOMA und 0,125 g Zinkstearat laut der o.g. Herstellvorschrift für Reaktionsmischungen behandelt. Die Vorhärtung unter UV-Bestrahlung wurde für 2 min in einem ASIGA mit einer DR-301C Lampe durchgeführt, wobei ein gummiartiges festes klares Material erhalten wurde. Die Aushärtung im Ofen wurde innerhalb von 5 min bei 220 °C durchgeführt, wobei ein festes leicht gelbliches Material erhalten wurde.

Die T_{g} nach der UV-Behandlung und vor der Ofenhärtung lag bei -35 °C und wurde durch die thermische Aushärtung auf 86°C erhöht. Durch die thermische Aushärtung wurde die charakteristische NCO-Bande zwischen 2300 bis 2250 cm⁻¹ in der Höhe um wenigstens 80 % verringert.

### Ausführungsbeispiel 2

Es wurden 19,625 g Polyisocyanat A1, 0,750 g Katalysator K2, 0,120 g Initiator, 0,175 g HPMA, je 1,875 g HDDA und IBOMA und 0,125 g Zinkstearat laut der o.g. Herstellvorschrift für Reaktionsmischungen behandelt. Die Vorhärtung unter UV-Bestrahlung wurde für 2 min in einem ASIGA mit einer DR-301C Lampe durchgeführt, wobei ein gummiartiges klares Material erhalten wird. Die Aushärtung im Ofen wurde innerhalb von 5 min bei 220 °C durchgeführt, wobei ein festes leicht gelbliches Material erhalten wurde.

Die T_{g} nach der UV-Behandlung und vor der Ofenhärtung lag bei -42 °C und wurde durch die thermische Aushärtung auf 61°C erhöht. Durch die thermische Aushärtung wurde die charakteristische NCO-Bande zwischen 2300 bis 2250 cm⁻¹ in der Höhe um wenigstens 80 % verringert.

### Ausführungsbeispiel 3

Es wurden 18,125 g Polyisocyanat A2, 0,750 g Katalysator K2, 0,160 g Initiator, 0,250 g HPMA, je 2,575 g BDDMA und IBOMA und 0,125 g Zinkstearat laut der o.g. Herstellvorschrift für Reaktionsmischungen behandelt. Die Vorhärtung unter UV-Bestrahlung wurde für 2 min in einem ASIGA mit einer DR-301C Lampe durchgeführt, wobei ein festes gummiartiges Material erhalten wurde. Die Aushärtung im Ofen wurde innerhalb von 5 min bei 220 °C durchgeführt, wobei ein festes leicht gelbliches Material erhalten wurde.

Die T_{g} nach der UV-Behandlung und vor der Ofenhärtung liegt bei -34 °C und wurde durch die thermische Aushärtung auf 86°C erhöht. Durch die thermische Aushärtung wurde die charakteristische NCO-Bande zwischen 2300 bis 2250 cm⁻¹ in der Höhe um wurde 80 % verringert.

### Ausführungsbeispiel 4

Es wurden 19,625 g Polyisocyanat A1, 0,750 g Katalysator K2, 0,120 g Initiator, 0,175 g HPMA, je 1,875 g BDDMA und IBOMA und 0,125 g Zinkstearat laut der o.g. Herstellvorschrift für Reaktionsmischungen behandelt. Die Vorhärtung unter UV-Bestrahlung wurde für 2 min in einem ASIGA mit einer DR-301C Lampe durchgeführt, wobei ein gummiartiges klares Material erhalten wurde. Die Aushärtung im Ofen wurde innerhalb von 5 min bei 220 °C durchgeführt, wobei ein festes leicht gelbliches Material erhalten wurde.

Die T_{g} nach der UV-Behandlung und vor der Ofenhärtung liegt bei -40 °C und wurde durch die thermische Aushärtung auf 76 °C erhöht. Durch die thermische Aushärtung wurde die charakteristische NCO-Bande zwischen 2300 bis 2250 cm⁻¹ in der Höhe um wenigstens 80 % verringert.

### Ausführungsbeispiel 5

Es wurden 21,69 g Polyisocyanat A2, 0,75 g Katalysator K2, 0,19 g Initiator, 0,30 g HPMA, je 3,08 g BDDMA und IBOMA und 0,15 g Zinkstearat laut der o.g. Herstellvorschrift für Reaktionsmischungen behandelt. Anschließend wurde die Reaktionsmischung nach der o.g. Herstellvorschrift für Komposite behandelt. Es wurde ein farbloses und trockenes Komposit erhalten.

### Ausführungsbeispiel 6

Es wurden 22,28 g Polyisocyanat A2, 0,11 g Katalysator K1, 0,20 g Initiator, 0,31 g HPMA, je 3,17 g BDDMA und IBOMA und 0,15 g Zinkstearat laut der o.g. Herstellvorschrift für Reaktionsmischungen behandelt. Anschließend wurde die Reaktionsmischung nach der o.g. Herstellvorschrift für Komposite behandelt. Es wurde ein farbloses und trockenes Komposit erhalten.

Die T_{g} nach sofortigem Verpressen lag bei 52,5°C. Ein Verpressen nach 14 Tagen lieferte ein Material mit einer T_{g} von 57,5°C. Das Verpressen nach einem Monat lieferte ein Material mit einer T_{g} von 55°C.

### Ausführungsbeispiel 7

Es wurden 23,51 g Polyisocyanat A1, 0,90 g Katalysator K2, 0,14 g Initiator, 0,21 g HPMA, je 2,25 g BDDMA und IBOMAund 0,15 g Zinkstearat laut der o.g. Herstellvorschrift für Reaktionsmischungen behandelt. Anschließend wurde die Reaktionsmischung nach der o.g. Herstellvorschrift für Komposite behandelt. Es wurde ein farbloses und trockenes Komposit erhalten.

### Ausführungsbeispiel 8

Es wurden 24,14 g Polyisocyanat A1, 0,11 g Katalysator K1, 0,15 g Initiator, 0,22 g HPMA, je 2,31 g BDDMA und IBOMA und 0,15 g Zinkstearat laut der o.g. Herstellvorschrift für Reaktionsmischungen behandelt. Anschließend wurde die Reaktionsmischung nach der o.g. Herstellvorschrift für Komposite behandelt. Es wurde ein farbloses und trockenes Komposit erhalten.

Die T_{g} nach sofortigem Verpressen lag bei 57°C. Ein Verpressen nach 14 Tagen lieferte ein Material mit einer T_{g} von 54°C_{.} Das Verpressen nach einem Monat lieferte ein Material mit einer T_{g} von 49°C.

Die Ausführungsbeipiele zeigen, dass in einer kontrollierten Zweistufenreaktion durch Kombination einer radikalischen Polymerisation und einer Polyadditionsreaktion von Isocyanatgruppen zu einem Polyisocyanuratnetzwerk Verbundwerkstoffe mit hoher Glasübergangstemperatur und guter Härte hergestellt werden können. Die Matrix des in einem ersten Schritt erhältlichen Halbzeug zeigte dabei eine gummiartigen Konsistenz. Das Halbzeug konnte selbst nach mehreren Wochen Lagerung bei Raumtemperatur und Raumluftfeuchtigkeit durch Temperaturerhöhung und Verpressen noch erfolgreich zu einem Verbundwerkstoff verarbeitet werden.

## Patentansprüche

1. Verfahren zur Herstellung eines Halbzeugs, enthaltend die Schritte,
a) Benetzung einer Faser mit einem Reaktionsgemisch mit einem molaren Verhältnis von Isocyanatgruppen zu mit Isocyanat reaktiven Gruppen von wenigstens 3 : 1, welches
(i) eine Isocyanatkomponente A;
(ii) wenigstens einen Trimerisierungskatalysator C; und
(iii) wenigstens eine Komponente ausgewählt aus der Gruppe bestehend aus den Komponenten B, D und E enthält, wobei
die Komponente B wenigstens eine ethylenische Doppelbindung, aber keine mit Isocyanat reaktive Gruppe aufweist;
die Komponente D in einem Molekül wenigstens eine mit Isocyanat reaktive Gruppe und wenigstens eine ethylenische Doppelbindung aufweist; und
die Komponente E in einem Molekül sowohl wenigstens eine Isocyanatgruppe und wenigstens eine ethylenische Doppelbindung aufweist; und
b) radikalische Polymerisation von wenigstens 50 % der im Reaktionsgemisch enthaltenen Doppelbindungen, wobei sich die Viskosität der Reaktionsmischung bestimmt durch ein Platte/Platte-Rheometer gemäß ISO 6721-10:2015-09 bei einer Frequenzen von 1/s und 23 °C um wenigstens 100 % erhöht.

2. Das Verfahren nach Anspruch 1, wobei die Faser in Form eines Gewebes, Geleges oder Gewirkes vorliegt.

3. Das Verfahren nach einem der Ansprüche 1 oder 2, wobei das Reaktionsgemisch zusätzlich eine Komponente F enthält, die als Initiator der radikalischen Polymerisation der ethylenischen Doppelbindungen wirkt.

4. Das Verfahren nach Anspruch 3, wobei die Komponente F durch aktinische Strahlung und / oder Wärmeeinwirkung aktiviert wird.

5. Das Verfahren nach einem der Ansprüche 1 bis 4 wobei der Gewichtsanteil and Isocyanatgruppen im Reaktionsgemisches wenigstens 1 % und höchstens 50 % beträgt.

6. Das Verfahren nach einem der Ansprüche 1 bis 5 wobei der Gewichtsanteil an ethylenisch ungesättigten Doppelbindungen wenigstens 1 % und höchstens 30 % beträgt.

7. Das Verfahren nach einem der Ansprüche 1 bis 6 wobei das molare Verhältnis von Isocyanatgruppen zu Isocyanat reaktiven Gruppen im Reaktionsgemische wenigstens 3 : 1 und höchstens 200 : 1 beträgt.

8. Das Verfahren nach einem der Ansprüche 1 bis 7 wobei ethylenisch ungesättigte Gruppen ohne gegenüber Isocyanat reaktiver Funktionalität neben ethylenisch ungesättigten Gruppen mit gegenüber Isocyanat reaktiver Funktionalität in einem Verhältnis von wenigstens 1:5 und höchstens 100:1 im Reaktionsgemisch vorliegen.

9. Das Verfahren nach einem der Ansprüche 1 bis 8 wobei die Reaktionsmischung nach radikalischer Polymerisation in Schritt b einen Modul G' von wenigstens 10⁵ Pa bestimmt durch ein Platte/Platte-Rheometer gemäß ISO 6721-10:2015-09 bei einer Frequenzen von 1/s und 23 °C aufweist.

10. Halbzeug erhältlich durch das Verfahren nach einem der Ansprüche 1 bis 9.

11. Verfahren zur Herstellung eines Verbundwerkstoffs enthaltend den Schritt der Vernetzung der im gemäß Ansprüchen 1 bis 9 erhaltenen Halbzeug enthaltenen Isocyanatgruppen.

12. Das Verfahren nach Anspruch 11, wobei die Faser vor und/oder während der Erwärmung umgeformt wird.

13. Das Verfahren nach Anspruch 11 oder 12, wobei während der Vernetzung der Isocyanatgruppen wenigstens 80 % der zu Beginn der Vernetzung vorhandenen freien Isocyanatgruppen verbraucht werden.

14. Das Verfahren nach einem der Ansprüche 11 bis 13, wobei wenigstens 50 % der in der Polyisocyanatzusamensetzung A ursprünglich vorliegenden Isocyanatgruppen zu Isocyanuratgruppen vernetzt werden.

15. Verbundwerkstoff erhältlich nach dem Verfahren gemäß eines der Ansprüche 11 bis 14.

## Claims

1. Process for producing a semifinished product, containing the steps of
a) wetting a fiber with a reaction mixture having a molar ratio of isocyanate groups to isocyanate-reactive groups of at least 3:1, which reaction mixture contains
(i) an isocyanate component A;
(ii) at least one trimerization catalyst C; and
(iii) at least one component selected from the group consisting of components B, D and E, wherein
component B has at least one ethylenic double bond but no isocyanate-reactive group;
component D has at least one isocyanate-reactive group and at least one ethylenic double bond in one molecule; and
component E has both at least one isocyanate group and at least one ethylenic double bond in one molecule; and
b) free-radical polymerization of at least 50% of the double bonds present in the reaction mixture, thus increasing the viscosity of the reaction mixture determined by a plate/plate rheometer according to ISO 6721-10:2015-09 at a frequency of 1/s and 23°C by at least 100%.

2. The process according to Claim 1, wherein the fiber is present in the form of a woven fabric, a non-crimp fabric, or knitted fabric.

3. The process according to either of Claims 1 and 2, wherein the reaction mixture additionally contains a component F which acts as an initiator for the free-radical polymerization of the ethylenic double bonds.

4. The process according to Claim 3, wherein the component F is activated by actinic radiation and/or the action of heat.

5. The process according to any of Claims 1 to 4, wherein the weight fraction of isocyanate groups in the reaction mixture is at least 1% and not more than 50%.

6. The process according to any of Claims 1 to 5, wherein the weight fraction of ethylenically unsaturated double bonds is at least 1% and not more than 30%.

7. The process according to any of Claims 1 to 6, wherein the molar ratio of isocyanate groups to isocyanate-reactive groups in the reaction mixture is at least 3:1 and not more than 200:1.

8. The process according to any of Claims 1 to 7, wherein ethylenically unsaturated groups without isocyanate-reactive functionality are present in the reaction mixture alongside ethylenically unsaturated groups with isocyanate-reactive functionality in a ratio of at least 1:5 and not more than 100:1.

9. The process according to any of Claims 1 to 8, wherein the reaction mixture has a modulus G' of at least 10⁵ Pa determined by a plate/plate rheometer according to ISO 6721-10:2015-09 at a frequency of 1/s and 23°C after free-radical polymerization in step b.

10. Semifinished product obtainable by the process according to any of Claims 1 to 9.

11. Process for producing a composite material, containing the step of crosslinking the isocyanate groups present in the semifinished product obtained according to Claims 1 to 9.

12. The process according to Claim 11, wherein the fiber is subjected to forming before and/or during heating.

13. The process according to Claim 11 or 12, wherein at least 80% of free isocyanate groups present at commencement of the crosslinking are consumed during the crosslinking of the isocyanate groups.

14. The process according to any of Claims 11 to 13, wherein at least 50% of isocyanate groups originally present in the polyisocyanate composition A are crosslinked to form isocyanurate groups.

15. Composite material obtainable by the process according to any of Claims 11 to 14.

## Revendications

1. Procédé de fabrication d'un produit semi-fini, comprenant les étapes
a) mouillage d'une fibre par un mélange réactionnel présentant un rapport molaire de groupes isocyanate à des groupes réactifs avec isocyanate d'au moins 3:1, qui contient
(i) un composant isocyanate A ;
(ii) au moins un catalyseur de trimérisation C ; et
(iii) au moins un composant choisi dans le groupe constitué par les composants B, D et E,
le composant B présentant au moins une double liaison éthylénique, mais pas de groupe réactif avec isocyanate ;
le composant D présentant, dans une molécule, au moins un groupe réactif avec isocyanate et au moins une double liaison éthylénique ;
et le composant E présentant, dans une molécule, tant au moins un groupe isocyanate qu'au moins une double liaison éthylénique ; et
b) polymérisation radicalaire d'au moins 50% des doubles liaisons contenues dans le mélange réactionnel, la viscosité du mélange réactionnel, déterminée par un rhéomètre à plaque/plaque selon la norme ISO 6721-10:2015-09 à une fréquence de 1/s et à 23°C, augmentant d'au moins 100%.

2. Procédé selon la revendication 1, la fibre se trouvant sous forme d'un tissu, d'un mat ou d'un tricot.

3. Procédé selon l'une des revendications 1 ou 2, le mélange réactionnel contenant en outre un composant F qui agit comme initiateur de la polymérisation radicalaire des doubles liaisons éthyléniques.

4. Procédé selon la revendication 3, le composant F étant activé par un rayonnement actinique et/ou l'action de la chaleur.

5. Procédé selon l'une des revendications 1 à 4, la proportion pondérale de groupes isocyanate dans le mélange réactionnel représentant au moins 1% et au plus 50%.

6. Procédé selon l'une des revendications 1 à 5, la proportion pondérale de doubles liaisons éthyléniquement insaturées représentant au moins 1% et au plus 30%.

7. Procédé selon l'une des revendications 1 à 6, le rapport molaire de groupes isocyanate aux groupes réactifs avec isocyanate dans le mélange réactionnel représentant au moins 3:1 et au plus 200:1.

8. Procédé selon l'une des revendications 1 à 7, les groupes éthyléniquement insaturés sans fonctionnalité réactive vis-à-vis d'isocyanate se trouvant à côté de groupes éthyléniquement insaturés présentant une fonctionnalité réactive vis-à-vis d'isocyanate dans un rapport d'au moins 1:5 et d'au plus 100:1 dans le mélange réactionnel.

9. Procédé selon l'une des revendications 1 à 8, le mélange réactionnel présentant, après la polymérisation radicalaire dans l'étape b, un module G' d'au moins 10⁵ Pa, déterminé par un rhéomètre à plaque/plaque selon la norme ISO 6721-10:2015-09 à une fréquence de 1/s et à 23°C.

10. Produit semi-fini pouvant être obtenu par le procédé selon l'une des revendications 1 à 9.

11. Procédé pour la fabrication d'un matériau composite contenant l'étape de réticulation des groupes isocyanate contenus dans le produit semi-fini obtenu selon les revendications 1 à 9.

12. Procédé selon la revendication 11, la fibre étant mise en forme avant et/ou pendant le chauffage.

13. Procédé selon la revendication 11 ou 12, au moins 80% des groupes isocyanate libres présents au début de la réticulation étant consommés pendant la réticulation des groupes isocyanate.

14. Procédé selon l'une des revendications 11 à 13, au moins 50% des groupes isocyanate initialement présents dans la composition de polyisocyanate A étant réticulés en groupes isocyanurate.

15. Matériau composite pouvant être obtenu par le procédé selon l'une des revendications 11 à 14.
